# EUROPÄISCHE PATENTSCHRIFT

(11) **EP 2 780 211 B1**
(45) Veröffentlichungstag und Bekanntmachung des Hinweises auf die Patenterteilung: **29.07.2015**
(21) Anmeldenummer: 12729832.1
(22) Anmeldetag: 23.05.2012
(51) Int. Cl.: B62D 1/184

(54) **FESTSTELLEINRICHTUNG FÜR EINE VERSTELLBARE LENKSÄULE FÜR EIN KRAFTFAHRZEUG**
FIXING DEVICE FOR AN ADJUSTABLE STEERING COLUMN FOR A MOTOR VEHICLE
DISPOSITIF DE FIXATION POUR UNE COLONNE DE DIRECTION RÉGLABLE DESTINÉE À UN VÉHICULE À MOTEUR

(30) Priorität: 16.11.2011 DE 102011055410
(43) Veröffentlichungstag der Anmeldung: 24.09.2014
(73) Patentinhaber: ThyssenKrupp Presta Aktiengesellschaft, 9492 Eschen (LI)
(72) Erfinder: CRON, Konstantin, CH-9464 Rüthi (CH); BLÄTTLER, Simon, CH-9450 Altstätten (CH); SCHNITZER, Hieronymus, 9487 Gamprin (LI); ROHR, Martin, A-6850 Dornbirn (AT)
(74) Vertreter: Fechner, Thomas
(86) Internationale Anmeldenummer: PCT/AT2012/000143
(87) Internationale Veröffentlichungsnummer: WO 2013/071317

(56) Entgegenhaltungen:
- EP-A2- 1 795 425
- DE-C1- 19 718 031

## Beschreibung

Die vorliegende Erfindung betrifft eine Feststelleinrichtung für eine verstellbare Lenksäule für ein Kraftfahrzeug, wobei die Feststelleinrichtung einen ersten Nockenträger mit einem oder mehreren fix daran befestigten Nocken und zumindest einen weiteren Nockenträger mit einem oder mehreren fix daran befestigten Nocken aufweist, wobei die Nockenträger relativ zueinander um eine Drehachse verdrehbar angeordnet sind und der oder die Nocken des ersten Nockenträgers bei Verdrehung der Nockenträger relativ zueinander um die Drehachse mit dem oder den Nocken des weiteren Nockenträgers ausschließlich aneinander entlang gleitend zusammenwirken.

Gattungsgemäße Nocken-gesteuerte Feststelleinrichtungen für verstellbare Lenksäulen sind in einer Vielzahl von Ausgestaltungsformen beim Stand der Technik bekannt. Bei gattungsgemäßen Feststelleinrichtungen sind die Nocken fix auf dem Nockenträger befestigt. Meist sind die Nocken einstückig mit der Basis des Nockenträgers ausgebildet. Durch Verdrehen der Nockenträger um die Drehachse gleiten die Nocken der miteinander korrespondierenden Nockenträger aneinander entlang. Durch das Verdrehen und die Ausgestaltung der Nocken kommt es dabei zu einem Hub in Längsrichtung der Drehachse wodurch die Feststelleinrichtung von einer Öffnungsstellung in eine Schließstellung oder umgekehrt gebracht wird. Der Bereich, in dem die Nocken gegeneinander verdreht werden können, der Verdrehbereich, wird durch die Verdrehposition der beiden Nocken in der Öffnungsstellung und die Verdrehposition der beiden Nocken in der Schließstellung begrenzt. In der Öffnungsstellung kann zur Anpassung der Position des Lenkrades an den jeweiligen Fahrer die verstellbare Lenksäule verstellt werden. In der Schließstellung der Feststelleinrichtung ist die Position des Lenkrades fixiert.

Eine gattungsgemäße Feststelleinrichtung ist z.B. aus der EP 1 795 425 A2 bekannt. Dort sind elastische Zungen vorgesehen, die dazu dienen, die beiden Nockenträger zur Reduzierung des Spiels in axialer Richtung der Drehachse elastisch aufeinander zu spannen.

Bei gattungsgemäßen Feststelleinrichtungen bewegen sich die Nocken ausschließlich gleitend aneinander lang. Es kommt also zu keiner Abrollbewegung oder dergleichen. Durch die aneinander entlang gleitenden Nocken der beteiligten Nockenträger tritt bei gattungsgemäßen Feststelleinrichtungen bereits automatisch eine gewisse Dämpfung der Bewegung beim Verdrehen der Nockenträger gegeneinander auf.

Aufgabe der Erfindung ist es, bei einer gattungsgemäßen Feststelleinrichtung eine weitere Vergleichmäßigung der Bewegung zwischen Öffnungsstellung und Schließstellung und/oder in der entgegengesetzten Richtung zu ermöglichen.

Erfindungsgemäß wird dies durch eine Feststelleinrichtung gemäß Patentanspruch 1 erreicht.

Es ist somit vorgesehen, dass die Feststelleinrichtung zumindest eine energieaufzehrende Dämpfungseinrichtung aufweist, welche die Verdrehung der Nockenträger in zumindest einer Drehrichtung um die Drehachse dämpft.

Durch die energieaufzehrende Dämpfungseinrichtung wird die Dreh- bzw. Rotationsgeschwindigkeit der Nockenträger beim Verdrehen gegeneinander verringert. Ein Scheppern oder Klappern der Feststelleinrichtung bei dieser Bewegung ist dadurch verringert. Insgesamt ergibt sich eine für den Benutzer angenehme gleichmäßige Bewegung in der Feststelleinrichtung.

Günstigerweise ist vorgesehen, dass die Dämpfungseinrichtung eine geschwindigkeitsabhängige Dämpfungsfunktion aufweist. In anderen Worten ist es somit bevorzugt vorgesehen, dass die Dämpfungseinrichtung bei verschiedenen Verdrehgeschwindigkeiten um die Drehachse unterschiedlich stark dämpft. So kann z.B. vorgesehen sein, dass bei einer schnellen Verdrehung der Nockenträger gegeneinander der Bremseffekt besonders stark ist, während bei einer langsamen Verdrehung die Bremswirkung geringer ist. Jedenfalls kann ein vollständiges Öffnen der Feststelleinrichtung begünstigt werden.

In einer bevorzugten Ausführungsform ist die Dämpfungseinrichtung derart ausgestaltet, dass die Dämpfungswirkung der Dämpfungseinrichtung, zumindest in einer Drehrichtung, für mindestens die Hälfte des möglichen Verdrehbereiches der Verdrehung der Nockenträger relativ zueinander wirksam ist. Besonders ist dabei zu bevorzugen, dass die Dämpfungswirkung, zumindest in einer Drehrichtung, für mindestens zwei Drittel, oder noch mehr, bevorzugt für mindestens drei Viertel, des möglichen Verdrehbereiches wirksam ist. Eine Dämpfungswirkung über den gesamten Verdrehbereich ist jedoch nicht erforderlich, da in dem Bereich hoher Spannkraft durch die daraus resultierenden hohen Reibkräfte bereits eine Dämpfung allein durch die Nockensteuerung gegeben ist. So kann es mit Vorzug vorgesehen sein, die Dämpfungswirkung der Dämpfungseinrichtung zu reduzieren oder ganz zu unterdrücken, für den Verdrehbereich, in dem die Spannkräfte der Feststelleinrichtung Werte annimmt, die größer oder gleich drei Viertel der maximal vorgesehenen Spannkraft der Feststelleinrichtung sind.

Durch die über einen großen Verdrehbereich wirkende Dämpfung kann eine starke Beschleunigung des Stellhebels, insbesondere beim Öffnen, verhindert werden, so dass erhöhte Vibrationen und/oder Kontaktschläge beim Öffnen gemindert sind.

Bevorzugte Ausgestaltungsformen einer erfindungsgemäßen Feststelleinrichtung sehen vor, dass die Dämpfungseinrichtung die Verdrehung der Nockenträger relativ zueinander in einer der Drehrichtungen um die Drehachse stärker dämpft als in der dazu entgegengesetzten Drehrichtung. Zum Beispiel ist es in diesem Sinne denkbar und möglich, dass die Dämpfungseinrichtung in einer der Drehrichtungen um die Drehachse einen Freilauf aufweist. Besonders bevorzugte Ausgestaltungsformen der Erfindung sehen vor, dass die energieaufzehrende Dämpfungseinrichtung nur beim Öffnen, aber nicht beim Schließen der Feststelleinrichtung wirkt. In anderen Worten kann somit vorgesehen sein, dass die Dämpfungseinrichtung ausschließlich bei einer Verdrehung der Nockenträger relativ zueinander von einer Schließstellung der Feststelleinrichtung in eine Öffnungsstellung der Feststelleinrichtung dämpft, wobei die Feststelleinrichtung in ihrer Öffnungsstellung das Verstellen von zwei Bauteilen der Lenksäule relativ zueinander zulässt und in ihrer Schließstellung dieses Verstellen unterbindet. Bei den zwei zueinander verstellbaren Bauteilen der Lenksäule kann es sich z.B. um eine Lenkspindellagereinheit zur drehbaren Lagerung einer Lenkspindel und um eine Konsoleneinheit zur Befestigung der Lenksäule am Kraftfahrzeug handeln.

Es muss aber in Schließrichtung nicht zwingend ein Freilauf vorhanden sein. Es kann abweichend auch vorgesehen sein, dass die Dämpfungseinrichtung bei einer Verdrehung der Nockenträger relativ zueinander von der genannten Schließstellung der Feststelleinrichtung in die genannte Öffnungsstellung der Feststelleinrichtung die Verdrehung stärker dämpft als die Verdrehung in die Gegenrichtung.

Die Nocken bilden auf den Nockenträgern eine Art von über die Basis des Nockenträgers überstehende Gebirge. Es ist bekannt, z.B. über entsprechende Ausformung der Steilheit der Flanken der Nocken die gewünschten Betätigungs- und Klemmkräfte bereitzustellen. Günstigerweise stehen die Nocken in Richtung parallel zur Drehachse von einer entsprechenden Basis des jeweiligen Nockenträgers ab. Jeder Nockenträger weist zumindest einen Nocken, aber in der Regel auch mehrere Nocken auf. Die Nockenträger bzw. deren Basis kann scheibenförmig ausgebildet sein. Die Basis bildet dann auch die Vertiefungen bzw. Täler zwischen den die Gebirge bildenden Nocken. In der Betriebsstellung sind die Nocken des ersten Nockenträgers und die des weiteren Nockenträgers günstigerweise aufeinander zu gerichtet.

Bei der erfindungsgemäß eingesetzten Dämpfungseinrichtung handelt es sich um eine energieaufzehrende Dämpfungseinrichtung. Dies bedeutet, dass beim Dämpfungsvorgang Energie aufgezehrt bzw. vernichtet und eben nicht gespeichert wird. Die durch die Dämpfungseinrichtung aufgezehrte Energie verwandelt sich meist in Wärme und kann nicht mehr als Bewegungsenergie in die Feststelleinrichtung zurückgeführt werden. Dies unterscheidet die energieaufzehrenden Dämpfungseinrichtungen gemäß der Erfindung auch von elastischen Federelementen oder dergleichen. Über solche Federelemente kann zwar bei einer entsprechenden Ausgestaltung auch ein Bremseffekt erzielt werden. Die bei diesem Bremsen entnommene Energie wird durch die gattungsfremden Federelemente aber als elastische Deformation gespeichert und später zumindest zum Teil wieder ins System zurückgeführt. Die Rückführung der Energie ins System erhöht aber die Schwingungsneigung und damit das Risiko eines Klapperns des Stellhebels beim Öffnen und oder Schließen der Feststelleinrichtung. Bei der erfindungsgemäß eingesetzten energieaufzehrenden Dämpfungseinrichtung ist eine solche Energierückführung nicht möglich.

Es hat sich überraschenderweise gezeigt, dass aus dem Bau von Beschlägen für die Möbelindustrie bekannte energieaufzehrende Dämpfungseinrichtungen für erfindungsgemäße Feststelleinrichtungen verwendet werden können. Zum Beispiel kann es sich um an sich bekannte Fluiddämpfer handeln. In diesem Sinne sehen bevorzugte Varianten der erfindungsgemäßen Feststelleinrichtung vor, dass die Dämpfungseinrichtung zumindest zwei relativ zueinander bewegbare Dämpferbauteile und zumindest ein Dämpfungsfluid aufweist, wobei das Dämpfungsfluid zur Dämpfung der sich relativ zueinander bewegenden Dämpferbauteile zwischen diesen angeordnet ist bzw. wirkt. Solche Dämpfungseinrichtungen sind als Linear- aber auch als Rotationsdämpfer bei der bereits genannten Herstellung von Möbelbeschlägen bekannt. Besonders bevorzugt ist vorgesehen, dass die Dämpfungseinrichtung ein Rotationsdämpfer ist oder einen solchen aufweist.

Bei solchen Rotationsdämpfern kann es sich beim ersten Dämpferbauteil z.B. um ein Gehäuse des Rotationsdämpfers handeln. Das zweite, der relativ zueinander bewegbaren Dämpferbauteile kann dann ein drehbar in dem genannten Gehäuse gelagerter Rotor sein. Die energieaufzehrende Dämpfungswirkung erfolgt im Dämpfungsfluid, welches zwischen dem Rotor und dem Gehäuse wirkt bzw. angeordnet ist. Beim Dämpfungsfluid kann es sich um Flüssigkeiten wie z.B. Öle, Silikon oder noch hochviskosere Materialien handeln. Als Dämpfungsfluid kann aber auch Luft oder ein anderes Gas eingesetzt werden. Die energieaufzehrende Dämpfungswirkung erfolgt durch Verdrängung des Dämpfungsfluides bzw. indem man das Dämpfungsfluid durch geeignet ausgeformte Drosselstellen und dergleichen hindurchdrückt. Beim Stand der Technik ist eine Vielzahl von geeigneten Dämpfern dieser Art bekannt.

Bevorzugte Ausgestaltungsformen erfindungsgemäßer Feststelleinrichtungen sehen vor, dass die Feststelleinrichtung einen Stellhebel aufweist, welcher um die Drehachse schwenkbar gelagert ist, und dass am Stellhebel die Dämpfungseinrichtung oder eine beim Dämpfungsvorgang mit der Dämpfungseinrichtung zusammenwirkende Betätigungsvorrichtung befestigt ist. Beim Stellhebel kann es sich z.B. um einen an sich bekannten, von Hand betätigbaren Hebel der Feststelleinrichtung handeln, welcher vom Fahrer betätigt wird, um die Feststelleinrichtung von ihrer Öffnungsstellung in ihre Schließstellung und/oder in die umgekehrte Richtung zu bewegen.

Die Dämpfungseinrichtung und die Betätigungsvorrichtung können über Verzahnungen miteinander zusammenwirken. Zum Beispiel ist ein Zusammenwirken einer gegebenenfalls gekrümmt oder gebogen ausgebildeten Zahnstange mit einem Zahnrad denkbar. Das Zahnrad kann Teil der Dämpfungseinrichtung sein. So sehen bevorzugte Ausgestaltungsformen z.B. vor, dass ein Rotor der Dämpfungseinrichtung ein Zahnrad trägt. Dieses kann dann mit einer gegebenenfalls gekrümmt bzw. gebogen ausgebildeten Zahnstange der Betätigungsvorrichtung zusammenwirken. Bevorzugte Ausgestaltungsformen der erfindungsgemäßen Feststelleinrichtung sehen vor, dass die Feststelleinrichtung einen bezüglich der Lenksäule ortsfesten Träger aufweist und der Stellhebel relativ zum Träger um die Drehachse drehbar ist, wobei die Dämpfungseinrichtung am Stellhebel und die Betätigungsvorrichtung am Träger oder andersherum befestigt ist. Es kann auch vorgesehen sein, dass einer der Nockenträger am bezüglich der Lenksäule ortsfesten Träger fixiert ist, während der andere der Nockenträger drehfest mit dem Stellhebel verbunden ist. Besonders bevorzugte Ausgestaltungsformen erfindungsgemäßer Feststelleinrichtungen sehen in diesem Zusammenhang einen Spannbolzen vor, welcher vorzugsweise koaxial zur Drehachse der Nockenträger ausgerichtet ist. Die Nockenträger können auf diesem Spannbolzen angeordnet sein. Das gleiche gilt für den Stellhebel. Der bezüglich der Lenksäule ortsfeste Träger kann als Teil eines Konsolenteils der Lenksäule ausgeführt sein. Dieses Konsolenteil dient zur Befestigung der Lenksäule an der Karosserie des Fahrzeugs.

Bevorzugt weist die Dämpfungseinrichtung zwei Fixierungslaschen auf, die jeweils zwischen zwei Befestigungsclips durch Presssitz am Stellhebel fixiert sind. Zur Sicherung können die Fixierungslaschen Durchgangsöffnungen aufweisen, durch die hindurch ein Rastclip geführt und verclipst ist, wodurch eine zusätzliche Verliersicherung für die Dämpfungseinrichtung gebildet ist. Die Befestigungsclips und/oder die Rastclips können jeweils Teile des Stellhebels bzw. an diesen angeformt sein.

Neben der Feststelleinrichtung an sich betrifft die Erfindung auch eine Lenksäule für ein Kraftfahrzeug mit einer erfindungsgemäßen Feststelleinrichtung, wobei vorgesehen ist, dass die Lenksäule eine Lenkspindellagerreinheit und eine, um ihre Längsachse drehbar in der Lenkspindellagereinheit gelagerte Lenkspindel und ein Konsolenteil aufweist, wobei die Lenkspindellagereinheit unter Verwendung der Feststelleinrichtung am Konsolenteil gelagert ist und die Lenkspindellagereinheit in einer Öffnungsstellung der Feststelleinrichtung relativ zum Konsolenteil entlang der Längsachse der Lenkspindel und/oder in einer Richtung quer dazu verstellbar und in einer Schließstellung der Feststelleinrichtung in seiner Lage relativ zum Konsolenteil festgestellt ist. Bei erfindungsgemäßen verstellbaren Lenksäulen kann es sich somit um längs- und/oder höhenverstellbare Lenksäulen handeln.

In den Figuren ist beispielhaft eine erfindungsgemäße Lenksäule mit einer erfindungsgemäßen Feststelleinrichtung dargestellt. Es zeigen:
Fig. 1 eine Seitenansicht auf die erfindungsgemäße Lenksäule mit abgenommenem Stellhebel,
Fig. 2 eine Teilansicht des Stellhebels,
Fig. 3 und 4 Ansichten der Betätigungsvorrichtungen,
Fig. 5 eine Draufsicht auf die erfindungsgemäß eingesetzte energieaufzehrende Dämpfungseinrichtung und
Fig. 6 eine Darstellung der Befestigung der Dämpfungseinrichtung am Stellhebel, ausschnittsweise im Schnitt.

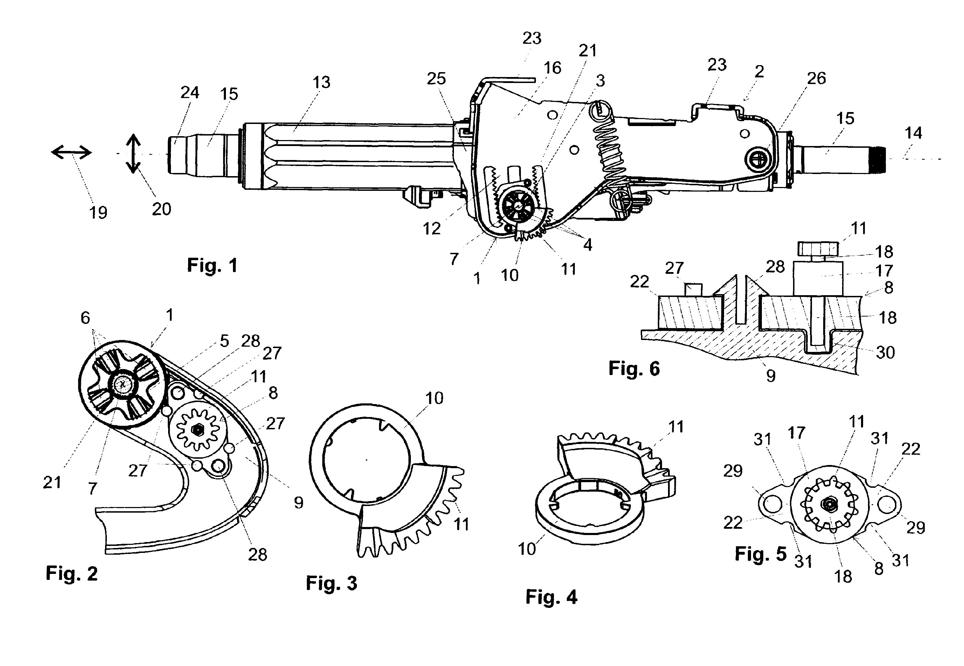

Der generelle Aufbau der erfindungsgemäßen Lenksäule 2 mit der erfindungsgemäßen Feststelleinrichtung 1 wird anhand der Seitenansicht gemäß Fig. 1 zunächst erläutert. Die Lenksäule 2 weist ein Konsolenteil 16 auf, welches mittels der Befestigungslaschen 23 an einer hier nicht dargestellten Karosserie des Kraftfahrzeugs befestigt werden kann. Über das Schwenkgelenk 26 ist ein Zwischenteil 25 am Konsolenteil 16 angeordnet. Durch das Verschwenken des Zwischenteils 25 relativ zum Konsolenteil 16 um das Schwenkgelenk 26 kann eine Höhenverstellung in Höhenverstellrichtung 20 erzielt werden. Im Zwischenteil 25 ist die Lenkspindellagereinheit 13 gelagert. Diese Lenkspindellagereinheit 13 kann entlang der Längsachse 14 der Lenkspindel 15, also in den Längsverstellrichtungen 19 relativ zum Zwischenteil 25 und damit zum Konsolenteil 16 verschoben werden. Im gezeigten Ausführungsbeispiel ist somit sowohl eine Höhen- als auch eine Längenverstellung möglich. Eine Verstellmöglichkeit existiert im Normalbetrieb also abgesehen vom Crashfall aber nur dann, wenn die Feststelleinrichtung 1 sich in ihrer Öffnungsstellung befindet. Befindet sich die Feststelleinrichtung 1 in ihrer Schließstellung, so ist die Position der Lenkspindellagereinheit 13 relativ zum Konsolenteil 16 und damit relativ zur Karosserie des Fahrzeugs festgelegt. In der Lenkspindellagereinheit 13 ist die Lenkspindel 15 um ihre Längsachse 14 drehbar gelagert. Am Lenkradanschluss 24 der Lenkspindel 15 kann das hier nicht dargestellte Lenkrad befestigt werden. Die Feststelleinrichtung 1 kann in ihrer Schließstellung mittels Formschluss und/oder aber auch mittels Reibschluss bzw. Kraftschluss für eine entsprechende Feststellung der Lenkspindellagereinheit 13 relativ zum Konsolenteil 16 sorgen. Entsprechende formund/oder kraftschlüssige Klemmsysteme sind beim Stand der Technik bekannt.

Die hier gezeigte Feststelleinrichtung 1 weist einen an sich bekannten, hier aber nur im Schnitt dargestellten Spannbolzen 21 auf. Dieser Spannbolzen 21 ist in Richtung normal zur Blattebene gemäß Fig. 1 durch das Konsolenteil 16 hindurchgeführt und auf einer gegenüberliegenden, hier nicht sichtbaren, Seite des Konsolenteils 16 mittels einer Mutter oder dgl. am Konsolenteil 16 gehalten. Auf der sichtbaren Seite ist auf dem Spannbolzen 21 der erste Nockenträger 3 mit seinen Nocken 4 angeordnet. Der zusätzliche Nockenträger 5 samt seiner Nocken 6 und dem Stellhebel 9 ist in Fig. 1 abgenommen und in Fig. 2 separat dargestellt. In der fertig montierten Stellung sind die beiden genannten Nockenträger 3 und 5 auf dem Spannbolzen 21 derart angeordnet, dass sie relativ zueinander um die Drehachse 7 verdrehbar sind und die Nocken 4 des ersten Nockenträgers 3 bei Verdrehung der Nockenträger 3 und 5 relativ zueinander um die Drehachse 7 mit dem oder den Nocken 6 des weiteren Nockenträgers 5 aneinander entlang gleitend zusammenwirken. Aufgrund der fixen Befestigung der Nocken 4 und 6 auf dem jeweiligen Nockenträger 3 und 5 handelt es sich dabei, für den Fall dass die Nocken der beiden zueinander verdrehbaren Nockenträger in Kontakt stehen, ausschließlich um eine Gleitbewegung. Es kommt also nicht zu einem Abrollen oder dergleichen. Im gezeigten Ausführungsbeispiel ist der erste Nockenträger 3 an einem bezüglich der Lenksäule 2 bzw. dem Konsolenteil 16 ortsfesten Träger 12 drehfest gehalten. Der zweite bzw. weitere Nockenträger 5 hingegen ist drehfest in den Stellhebel 9 integriert. Dies hat zur Folge, dass bei einem Verschwenken des Stellhebels 9 um die koaxial zum Spannbolzen 21 angeordnete Drehachse 7 die Nockenträger 3 und 5 um diese Drehachse 7 relativ zueinander verdreht werden. Durch das entsprechende Zusammenwirken ihrer Nocken 4 und 6 kommt es dadurch zu einem Hub in Längsrichtung der Drehachse 7, wodurch es je nach Hubrichtung, wie an sich bekannt, zu einem Spannen bzw. Schließen oder einem Entspannen bzw. Öffnen der Feststelleinrichtung 1 kommt. In der Schließstellung der Feststelleinrichtung 1 bewirkt dieser Hub, dass die Lenkspindellagereinheit 13 in ihrer Position am Konsolenteil 16 festgelegt ist. In der Öffnungsstellung der Feststelleinrichtung 1 stehen die bereits eingangs genannten Verstellmöglichkeiten zur Verfügung.

Um die Bewegung der Feststelleinrichtung 1 zu vergleichsmäßigen, umfasst diese erfindungsgemäß eine energieaufzehrende Dämpfungseinrichtung 8, die im gezeigten Ausführungsbeispiel am Stellhebel 9 befestigt ist. Die Befestigung erfolgt bevorzugt, indem die Dämpfungseinrichtung 8 im Bereich des Dämpferbauteils 18 in eine Vertiefung 30 im Stellhebel 9 eingepasst ist. Dabei soll vermieden werden, dass die Wandungen der Vertiefung 30 Spannungen auf die Baugruppe aus den Dämpferbauteilen 17, 18 übertragen. Die Befestigung erfolgt durch Befestigungsclips 27, die an Eingriffsabschnitte 31, die an den Fixierungslaschen 22 angeordnet sind, mit Presssitz angelegt sind. Zur Sicherung der Verbindung sind zusätzlich zwei Rastclips 28 vorgesehen, die Öffnungen 29 in den Fixierungslaschen 22 durchdringen und mit Hinterschnitt an den Fixierungslaschen verclipst sind. Bevorzugt sind, wie im Beispiel ausgeführt, die Rastclips 28 einstückig mit dem Stellhebel 9 verbunden, beispielsweise durch Ausbildung direkt im Spritzgussverfahren für den Stellhebel. Da die Fixierungslaschen zur Baugruppe der Dämpferbauteile 17, 18 beabstandet angeordnet sind, werden keine oder jedoch nur vernachlässigbar geringe Kräfte von der Befestigung der Dämpfungseinrichtung 8 auf die Baugruppe bestehend aus den Dämpferbauteilen 17, 18 übertragen. Damit ist die Funktionsfähigkeit der Dämpfungseinrichtung 8 gegeben und eine preiswerte Befestigungsmethode realisiert. Bevorzugt sind die Befestigungsclips 27 ebenfalls einstückig mit dem Stellhebel 9 verbunden, wiederum bevorzugt bereits im Spritzgussverfahren des Stellhebels direkt mit ausgebildet. Bei einer alternativen Anordnung des Dämpfungselementes 8 am Träger ist eine vergleichbare Befestigung denkbar und möglich. In der teilweise geschnittenen Darstellung der Fig. 6 sind ein Befestigungsclip 27, ein Rastclip 28 und die Vertiefung 30 gut zu sehen. Die Dämpferbauteile 17, 18 sind nicht im Schnitt, sondern nur stark schematisiert dargestellt. Sie können wie beim Stand der Technik bekannt ausgeführt sein.

Die mit der energieaufzehrenden Dämpfungseinrichtung 8 zusammenwirkende Betätigungsvorrichtung 10 ist im gezeigten Ausführungsbeispiel drehfest am Träger 12 und damit am Konsolenteil 16 befestigt. Im gezeigten Ausführungsbeispiel weisen sowohl die energieraufzehrende Dämpfungseinrichtung 8 als auch die Betätigungsvorrichtung 10 jeweils eine Verzahnung 11 auf, mit der sie zusammenwirken. Die Verzahnung 11 der Dämpfungseinrichtung 8 ist im gezeigten Ausführungsbeispiel als ein Zahnrad ausgebildet. Die Verzahnung 11 der Betätigungsvorrichtung 10 ist bei der gezeigten Variante als gebogene Zahnstange ausgeführt.

Der Vollständigkeit halber wird darauf hingewiesen, dass natürlich auch andere erfindungsgemäße Ausgestaltungsformen denkbar sind. So ist es z.B. möglich, dass die energieaufzehrende Dämpfungseinrichtung 8 am Träger 12 bzw. Konsolenteil 16 befestigt ist, während die Betätigungsvorrichtung 10 fix am Hebel 9 angeordnet ist. Auch andere Arten der Ausbildung von Verzahnungen11 sind möglich. Darüber hinaus ist es z.B. auch denkbar, dass die erfindungsgemäße Dämpfungseinrichtung 8 nicht wie hier gezeigt als Rotationsdämpfer sondern z.B. als Lineardämpfer oder als eine Kombination von Linear- und Rotationsdämpfer ausgeführt ist. Prinzipiell können alle Arten von beim Stand der Technik bekannten und für die Anwendung geeigneten energieaufzehrenden Dämpfungseinrichtungen eingesetzt werden.

Im gezeigten Ausführungsbeispiel führt der Eingriff der Verzahnungen 11 der Dämpfungseinrichtung 8 und der Betätigungsvorrichtung 10 ineinander jedenfalls dazu, dass bei einem Verschwenken des Stellhebels 9 um die Drehachse 7 der gewünschte Dämpfungseffekt auftritt. Grundsätzlich kann diese Dämpfung in beiden Richtungen vorgesehen sein. Wie bereits eingangs erläutert, kann sie geschwindigkeitsabhängig sein. Darüber hinaus kann auch vorgesehen sein, dass in die eine Drehrichtung eine höhere Dämpfungswirkung erzielt wird als in die andere. Es können auch wegabhängige Dämpfungsprofile vorgesehen sein. All dies ist z.B. durch eine geeignete Ausgestaltung der entsprechenden Dämpfungseinrichtung 8 möglich. Besonders bevorzugt ist jedenfalls vorgesehen, dass die Dämpfungseinrichtung 8 in einer der Drehrichtungen um die Drehachse 7 einen Freilauf aufweist. Bei besonders bevorzugten Varianten ist in diesem Sinne vorgesehen, dass die Dämpfungseinrichtung 8 nur, also ausschließlich, bei einer Verdrehung der Feststelleinrichtung von ihrer Schließstellung in ihre Öffnungsstellung wirkt. Alternativ kann auch vorgesehen sein, dass die Dämpfungseinrichtung bei dieser Verdrehung zumindest stärker wirkt als bei der Verdrehung in der Gegenrichtung.

In Fig. 5 ist noch einmal eine Draufsicht auf die in diesem Ausführungsbeispiel eingesetzte energieaufzehrende Dämpfungseinrichtung 8 in Form eines Rotationsdämpfers gezeigt. In Fig. 5 ist der Rotationsdämpfer losgelöst vom Stellhebel 9 dargestellt. Zu sehen sind zunächst die beiden Fixierungslaschen 22, mit denen die Dämpfungseinrichtung 8 am Stellhebel 9 oder alternativ gegebenenfalls auch am Träger 12 bzw. am Konsolenteil 16 befestigt werden kann. Die Dämpfungseinrichtung 8 gemäß Fig. 5 weist zwei Dämpferbauteile 17 und 18 auf. Beim Dämpferbauteil 17-handelt es sich um ein Gehäuse, an dem im gezeigten Ausführungsbeispiel auch die Fixierungslaschen 22 befestigt sind. Das zweite Dämpferbauteil 18 ist ein Rotor, welcher drehbar im Dämpferbauteil 17, also im Gehäuse der Dämpfungseinrichtung 8 gelagert ist. Zwischen den beiden genannten Dämpferbauteilen 17 und 18 wirkt ein meist von außen nicht sichtbares Dämpfungsfluid um die gewünschte energieaufzehrende Dämpfung zu erreichen. Geeignete Dämpfungseinrichtungen 8, insbesondere in Form von Rotationsdämpfern, sind, wie eingangs bereits erläutert, aus dem Bau von Beschlagteilen für Möbel in einer Vielzahl von Ausgestaltungsformen mit oder ohne Freilauf bekannt, sodass sich eine detaillierte Darstellung des inneren Aufbaus der Dämpfungseinrichtung 8 erübrigt.

### Legende

| zu den Hinweisziffern: | | | |
|---|---|---|---|
| 1 | Feststelleinrichtung | 17 | Dämpferbauteil |
| 2 | Lenksäule | 18 | Dämpferbauteil |
| 3 | erster Nockenträger | 19 | Längsverstellrichtung |
| 4 | Nocken | 20 | Höhenverstellrichtung |
| 5 | weiterer Nockenträger | 21 | Spannbolzen |
| 6 | Nocken | 22 | Fixierungslaschen |
| 7 | Drehachse | 23 | Befestigungslaschen |
| 8 | Dämpfungseinrichtung | 24 | Lenkradanschluss |
| 9 | Stellhebel | 25 | Zwischenteil |
| 10 | Betätigungsvorrichtung | 26 | Schwenkgelenk |
| 11 | Verzahnung | 27 | Befestigungsclip |
| 12 | Träger | 28 | Rastclip |
| 13 | Lenkspindellagereinheit | 29 | Öffnung |
| 14 | Längsachse | 30 | Vertiefung |
| 15 | Lenkspindel | 31 | Eingriffsabschnitt |
| 16 | Konsolenteil | | |

## Patentansprüche

1. Feststelleinrichtung (1) für eine verstellbare Lenksäule (2) für ein Kraftfahrzeug, wobei die Feststelleinrichtung (1) einen ersten Nockenträger (3) mit einem oder mehreren fix daran befestigten Nocken (4) und zumindest einen weiteren Nockenträger (5) mit einem oder mehreren fix daran befestigten Nocken (6) aufweist, wobei die Nockenträger (3, 5) relativ zueinander um eine Drehachse (7) verdrehbar angeordnet sind und der oder die Nocken (4) des ersten Nockenträgers (3) bei Verdrehung der Nockenträger (3, 5) relativ zueinander um die Drehachse (7) mit dem oder den Nocken (6) des weiteren Nockenträgers (5) ausschließlich aneinander entlang gleitend zusammenwirken, **dadurch gekennzeichnet, dass** die Feststelleinrichtung (1) zumindest eine energieaufzehrende Dämpfungseinrichtung (8) aufweist, welche die Verdrehung der Nockenträger (3, 5) in zumindest einer Drehrichtung um die Drehachse (7) dämpft.

2. Feststelleinrichtung (1) nach Anspruch 1, **dadurch gekennzeichnet, dass** die Dämpfungswirkung der Dämpfungseinrichtung (8), zumindest in einer Drehrichtung, für mindestens zwei Drittel des möglichen Verdrehbereiches der Verdrehung der Nockenträger (3, 5) relativ zueinander wirksam ist.

3. Feststelleinrichtung (1) nach zumindest einem der vorhergehenden Ansprüche, **dadurch gekennzeichnet, dass** die Dämpfungseinrichtung (8) die Verdrehung der Nockenträger (3, 5) relativ zueinander in einer der Drehrichtungen um die Drehachse (7) stärker dämpft als in der dazu entgegengesetzten Drehrichtung.

4. Feststelleinrichtung (1) nach zumindest einem der vorhergehenden Ansprüche, **dadurch gekennzeichnet, dass** die Dämpfungseinrichtung (8) in einer der Drehrichtungen um die Drehachse (7) einen Freilauf aufweist.

5. Feststelleinrichtung (1) nach einem der Ansprüche 3 oder 4, **dadurch gekennzeichnet, dass** die Dämpfungseinrichtung (8) ausschließlich bei einer Verdrehung der Nockenträger (3, 5) relativ zueinander von einer Schließstellung der Feststelleinrichtung (1) in eine Öffnungsstellung der Feststelleinrichtung (1) dämpft oder bei dieser Verdrehung zumindest stärker als bei einer Verdrehung in die Gegenrichtung dämpft, wobei die Feststelleinrichtung (1) in ihrer Öffnungsstellung das Verstellen von zwei Bauteilen der Lenksäule (2) relativ zueinander zulässt und in ihrer Schließstellung dieses Verstellen unterbindet.

6. Feststelleinrichtung (1) nach zumindest einem der vorhergehenden Ansprüche, **dadurch gekennzeichnet, dass** die Dämpfungseinrichtung (8) zumindest zwei relativ zueinander bewegbare Dämpferbauteile (17, 18) und zumindest ein Dämpfungsfluid aufweist, wobei das Dämpfungsfluid zur Dämpfung der sich relativ zueinander bewegenden Dämpferbauteile (17, 18) zwischen diesen angeordnet ist bzw. wirkt.

7. Feststelleinrichtung (1) nach zumindest einem der vorhergehenden Ansprüche, **dadurch gekennzeichnet, dass** die Dämpfungseinrichtung (8) ein Rotationsdämpfer ist oder einen solchen aufweist.

8. Feststelleinrichtung (1) nach zumindest einem der vorhergehenden Ansprüche, **dadurch gekennzeichnet, dass** die Feststelleinrichtung (1) einen Stellhebel (9) aufweist, welcher um die Drehachse (7) schwenkbar gelagert ist, und dass am Stellhebel (9) die Dämpfungseinrichtung (8) oder eine beim Dämpfungsvorgang mit der Dämpfungseinrichtung (8) zusammenwirkende Betätigungsvorrichtung (10) befestigt ist.

9. Feststelleinrichtung (1) nach Anspruch 8, **dadurch gekennzeichnet, dass** die Dämpfungseinrichtung (8) und die Betätigungsvorrichtung (10) über Verzahnungen (11) zusammenwirken.

10. Feststelleinrichtung (1) nach Anspruch 8 oder 9, **dadurch gekennzeichnet, dass** die Feststelleinrichtung (1) einen bezüglich der Lenksäule (2) ortsfesten Träger (12) aufweist und der Stellhebel (9) relativ zum Träger (12) um die Drehachse (7) drehbar ist, wobei die Dämpfungseinrichtung (8) am Stellhebel (9) und die Betätigungsvorrichtung (10) am Träger (12) oder andersherum befestigt ist.

11. Lenksäule (2) für ein Kraftfahrzeug mit einer Feststelleinrichtung (1) nach zumindest einem der vorhergehenden Ansprüche, **dadurch gekennzeichnet, dass** die Lenksäule (2) eine Lenkspindellagereinheit (13) und eine, um ihre Längsachse (14) drehbar in der Lenkspindellagereinheit (13) gelagerte Lenkspindel (15) und ein Konsoleteil (16) aufweist, wobei die Lenkspindellagereinheit (13) unter Verwendung der Feststelleinrichtung (1) am Konsolenteil (16) gelagert ist und die Lenkspindellagereinheit (13) in einer Öffnungsstellung der Feststelleinrichtung (1) relativ zum Konsolenteil (16) entlang der Längsachse (14) der Lenkspindel (15) und/oder in einer Richtung quer dazu verstellbar und in einer Schließstellung der Feststelleinrichtung (1) in seiner Lage relativ zum Konsolenteil (16) festgestellt ist.

## Claims

1. A locking device (1) for an adjustable steering column (2) for a motor vehicle, wherein the locking device (1) has a first cam carrier (3) with one or a plurality of cams (4) fixedly secured thereto and at least one further cam carrier (5) with one or a plurality of cams (6) fixedly secured thereto, wherein the cam carriers (3, 5) are arranged so as to be rotatable relative to one another about a rotational axis (7) and, upon rotation of the cam carriers (3, 5) relative to one another about the rotational axis (7), the cam(s) (4) of the first cam carrier (3) cooperate with the cam(s) (6) of the further cam carrier (5) in a manner so as to solely slide along one another, **characterized in that** the locking device (1) has at least one energy-consuming damping device (8) which damps the rotation of the cam carriers (3, 5) about the rotational axis (7) in at least one rotational direction.

2. A locking device (1) according to claim 1, **characterized in that** at least in one rotational direction, the damping action of the damping device (8) is effective for at least two thirds of the possible rotation range of the rotation of the cam carriers (3, 5) relative to one another.

3. A locking device (1) according to at least one of the preceding claims, **characterized in that** the damping device (8) has a greater damping effect on the rotation of the cam carriers (3, 5) relative to one another in one of the rotational directions about the rotational axis (7) than in the opposite rotational direction.

4. A locking device (1) according to at least one of the preceding claims, **characterized in that** the damping device (8) has a freewheel in one of the rotational directions about the rotational axis (7).

5. A locking device (1) according to one of claims 3 and 4, **characterized in that** the damping device (8) damps solely upon rotation of the cam carriers (3, 5) relative to one another from a closed position of the locking device (1) into an open position of the locking device (1) or upon this rotation has at least a greater damping effect than upon rotation in the opposite direction, wherein the locking device (1) permits the adjustment of two components of the steering column (2) relative to one another in its open position and prevents this adjustment in its closed position.

6. A locking device (1) according to at least one of the preceding claims, **characterized in that** the damping device (8) has at least two damper components (17,18) movable relative to one another and at least one damping fluid, wherein the damping fluid is for the purpose of damping the damper components (17,18) moving relative to one another arranged therebetween or acts therebetween.

7. A locking device (1) according to at least one of the preceding claims, **characterized in that** the damping device (8) is a rotational damper or has such a damper.

8. A locking device (1) according to at least one of the preceding claims, **characterized in that** the locking device (1) has an adjusting lever (9) which is pivotably mounted about the rotational axis (7), and **in that** the damping device (8) or an actuating device (10) cooperating with the damping device (8) during the damping procedure is secured to the adjusting lever (9).

9. A locking device (1) according to claim 8, **characterized in that** the damping device (8) and the actuating device (10) cooperate via toothing (11).

10. A locking device (1) according to claim 8 or 9, **characterized in that** the locking device (1) has a carrier (12) which is stationary with regard to the steering column (2) and the adjusting lever (9) is rotatable about the rotational axis (7) relative to the carrier (12), wherein the damping device (8) is secured to the adjusting lever (9) and the actuating device (10) to the carrier (12) or vice versa.

11. A steering column (2) for a motor vehicle with a locking device (1) according to at least one of the preceding claims, **characterized in that** the steering column (2) has a steering shaft bearing unit (13) and a steering shaft (15), mounted in the steering shaft bearing unit (13) so as to be rotatable about the longitudinal axis (14) of the steering shaft (15), and a bracket part (16), wherein the steering shaft bearing unit (13) is mounted on the bracket part (16) using the locking device (1) and the steering shaft bearing unit (13) is in an open position of the locking device (1) adjustable relative to the bracket part (16) along the longitudinal axis (14) of the steering shaft (15) and/or in a direction transverse thereto and in a closed position of the locking device (1) is locked in its position relative to the bracket part (16).

## Revendications

1. Dispositif de fixation (1) pour une colonne de direction (2) réglable pour un véhicule automobile, ledit dispositif de fixation (1) comportant un premier support de came (3) avec une ou plusieurs cames (4) fixement montées sur celui-ci, et au moins un autre support de came (5) avec une ou plusieurs cames (6) fixement montées sur celui-ci, les supports de came (3, 5) étant disposés de manière à être rotatifs l'un par rapport à l'autre autour d'un axe de rotation (7), et la ou les cames (4) du premier support de came (3) coopérant avec la ou les cames (6) de l'autre support de came (5) en glissant exclusivement les unes le long des autres lors d'une rotation des supports de came (3, 5) l'un par rapport à l'autre autour de l'axe de rotation (7), **caractérisé en ce que** ledit dispositif de fixation (1) comprend au moins un dispositif amortisseur (8) absorbant l'énergie, lequel amortit la rotation des supports de came (3, 5) dans au moins une direction de rotation autour de l'axe de rotation (7).

2. Dispositif de fixation (1) selon la revendication 1, **caractérisé en ce que** dans au moins une direction de rotation, l'effet d'amortissement du dispositif amortisseur (8) est actif sur au moins deux tiers de la plage de rotation possible des supports de came (3, 5) l'un par rapport à l'autre.

3. Dispositif de fixation (1) selon au moins une des revendications précédentes, **caractérisé en ce que** le dispositif amortisseur (8) amortit plus intensément la rotation des supports de came (3, 5) l'un par rapport à l'autre dans une des directions de rotation autour de l'axe de rotation (7), que dans la direction de rotation opposée à celle-ci.

4. Dispositif de fixation (1) selon au moins une des revendications précédentes, **caractérisé en ce que** le dispositif amortisseur (8) présente une roue libre dans une des directions de rotation autour de l'axe de rotation (7).

5. Dispositif de fixation (1) selon la revendication 3 ou 4, **caractérisé en ce que** le dispositif amortisseur (8) amortit exclusivement lors d'une rotation des supports de came (3, 5) l'un par rapport à l'autre d'une position de fermeture du dispositif de fixation (1) à une position d'ouverture du dispositif de fixation (1), ou amortit au moins plus intensément lors de cette rotation que lors d'une rotation dans la direction contraire, ledit dispositif de fixation (1) autorisant dans sa position d'oùverture le déplacement l'un par rapport à l'autre de deux composants de la colonne de direction (2), et interdisant celui-ci dans sa position de fermeture.

6. Dispositif de fixation (1) selon au moins une des revendications précédentes, **caractérisé en ce que** le dispositif amortisseur (8) comporte au moins deux composants d'amortisseur (17, 18) mobiles l'un par rapport à l'autre et au moins un fluide d'amortissement, ledit fluide d'amortissement étant présenté ou agissant entre les composants d'amortisseur (17, 18) mobiles l'un par rapport à l'autre pour l'amortissement de ceux-ci.

7. Dispositif de fixation (1) selon au moins une des revendications précédentes, **caractérisé en ce que** le dispositif amortisseur (8) est, ou comprend un amortisseur de rotation.

8. Dispositif de fixation (1) selon au moins une des revendications précédentes, **caractérisé en ce que** ledit dispositif de fixation (1) comporte un levier de réglage (9) monté de manière à pivoter autour de l'axe de rotation (7), et **en ce que** le dispositif amortisseur (8) ou un dispositif d'actionnement (10) coopérant avec le dispositif amortisseur (8) pendant l'amortissement est fixé sur le levier de réglage (9).

9. Dispositif de fixation (1) selon la revendication 8, **caractérisé en ce que** le dispositif amortisseur (8) et le dispositif d'actionnement (10) coopèrent au moyen de dentures (11).

10. Dispositif de fixation (1) selon la revendication 8 ou 9, **caractérisé en ce que** ledit dispositif de fixation (1) comporte un support (12) fixe par rapport à la colonne de direction (2) et **en ce que** le levier de réglage (9) est rotatif autour de l'axe de rotation (7) par rapport au support (12), le dispositif amortisseur (8) étant fixé sur le levier de réglage (9) et le dispositif d'actionnement (10) sur le support (12), ou inversement.

11. Colonne de direction (2) pour un véhicule automobile, avec un dispositif de fixation (1) selon au moins une des revendications précédentes, **caractérisé en ce que** la colonne de direction (2) comporte une unité de palier d'arbre de direction (13) et un arbre de direction (15) rotatif autour de son axe longitudinal (14) dans l'unité de palier d'arbre de direction (13) ainsi qu'une pièce de console (16), l'unité de palier d'arbre de direction (13) étant montée sur la pièce de console (16) au moyen du dispositif de fixation (1) et l'unité de palier d'arbre de direction (13) étant réglable par rapport à la pièce de console (16) le long de l'axe longitudinal (14) de l'arbre de direction (15) et/ou dans une direction transversale à celui-ci dans une position d'ouverture du dispositif de fixation (1), et sa position étant fixée par rapport à la pièce de console (16) dans une position de fermeture du dispositif de fixation (1).
